# EUROPEAN PATENT APPLICATION

(11) **EP 3 439 146 A1**
(43) Date of publication of application: **06.02.2019**
(21) Application number: 17184275.0
(22) Date of filing: 01.08.2017
(51) Int. Cl.: H02K 1/24

(54) **ROTOR FOR A GENERATOR AND GENERATOR**

(71) Applicant: Mahle International GmbH, 70376 Stuttgart (DE)
(72) Inventor: CERNIGOJ, Andrej, 5270 Ajdovscina (SI); PAHOR-KOS, Vanja, 1370 Logatec (SI); PAVSIC, Darjo, 5212 Dobrovo (SI); TUREL, Ales, 5290 Sempeter pri Gorici (SI)
(74) Representative: BRP Renaud & Partner mbB Rechtsanwälte Patentanwälte Steuerberater

(57) **Abstract**

The invention relates to a rotor (1) for a generator. The rotor (1) has a shaft (2), which defines an axis of rotation (3) of the rotor (1). The rotor (1) moreover has at least one claw pole (4), having a base element (5) which is perpendicular to the axis of rotation (3), and a plurality of integrally-configured claw pole teeth (6) on the base element (5). The claw pole teeth (6) of the claw pole (4) are arranged perpendicularly on the base element (5), and outer surfaces (7) of the claw pole teeth (6) constitute a radial outer circumference (8) of the rotor (1) to the axis of rotation (3). The claw pole (4) is moreover comprised of a magnetically-conductive material.

According to the invention, at least one of the claw pole teeth (6) has at least one separating region (9) which, at least in part, lies on the outer surface (7) of the claw pole tooth (6) and, at least in part, is electrically insulated from the respective claw pole tooth (6).

## Description

The invention relates to a rotor for a generator according to the introductory clause of Claim 1. The invention further relates to a generator having such a rotor.

A generator is employed for the generation of a three (or more)-phase alternating current. The generator has a stator and a rotor, which is accommodated on the interior of the stator and having at least two claw poles. The claw poles in this case have a plurality of claw pole teeth, the surfaces of which form an outer circumference of the rotor. By means of an electromagnet and an original current a permanent magnetic field is generated, wherein each of the claw pole forms a single magnetic pole. The plurality of the claw pole teeth of the two claw poles alternate on the outer circumference in such a manner, that the magnetic poles alternate in the circumferential direction on the outer circumference of the rotor. Upon the rotation of the rotor, an alternating current is induced in electrical windings of the stator by the magnetic poles alternating on the outer circumference of the rotor. The frequency of the induced alternating current in this case is dependent upon the speed of rotation of the rotor and upon the number of poles - and thus, under normal circumstances, upon the number of claw pole teeth - on the claw pole, and the strength of the alternating current is proportional, *inter alia*, to the strength of the permanent magnetic field.

By rotation of the rotor, eddy currents are induced in the claw pole teeth of the claw poles, which are oriented in opposition to the original current, and weaken frequently the permanent magnetic field. This leads to a heat generation in the claw poles. In order to reduce eddy currents, for example in US 6,545,383 B1, a pattern is imprinted onto the surfaces of the claw pole teeth. By means of the imprinted pattern, the respective surface of the claw pole tooth is divided into a number of enclosed sub-surfaces, such that eddy currents only flow within the sub-surfaces, and are reduced accordingly. However, claw poles of this type are extremely complex to produce, and consequently are comparatively expensive. Other solutions for the reduction of eddy currents in a generator of different design, as described, for example, in US 6,133,669, are not transferable to a generic generator.

The object of the invention is therefore the proposal of an alternative design for a rotor and for a generator, in order to reduce the loss of a permanent magnetic field around the rotor associated with eddy currents.

According to the invention, this object is fulfilled by the subject matter of the independent claims. Advantageous forms of embodiment are the subject matter of the dependent claims.

The present invention is based upon the general concept of the reduction of eddy currents induced in a rotor of a generator. The rotor in this case has a shaft, wherein the shaft defines an axis of rotation of the rotor. The rotor moreover has at least one claw pole, having a base element which is perpendicular to the axis of rotation, and a plurality of integrally-configured claw pole teeth on the base element, wherein the claw pole teeth of the claw pole are arranged perpendicularly on the base element, and outer surfaces of the claw pole teeth constitute a radial outer circumference of the rotor to the axis of rotation. The claw pole is comprised of a magnetically-conductive material. According to the invention, at least one of the claw pole teeth has at least one separating region which, at least in part, lies on the outer surface of the claw pole tooth and, at least in part, is electrically insulated from the respective claw pole tooth.

By means of the separating region which, at least in part, is electrically insulated from the claw pole tooth, an eddy current induced in the separating region can only flow in the separating region. In a known manner, the strength of the induced eddy current is dependent upon the surface area within which said eddy current flows. In the electrically-insulated separating region, the surface area within which the eddy current flows is limited, and the strength of the eddy current induced by rotation of the rotor is reduced. In this manner, the loss of the permanent magnetic field around the rotor associated with the eddy current is minimized.

Advantageously, it is provided that the at least one separating region is comprised of a magnetically-conductive material, preferably of electric sheet steel, and is isolated from the claw pole tooth, at least in part, by an electrically-insulating coating or lamination. Accordingly, the separating region also contributes to the permanent magnetic field induced on the claw pole tooth, and the strength of the alternating current induced in the generator is maintained. Preferably, the magnetically-conductive material is an electric sheet steel. The electrically-insulating coating or lamination in this case can be, for example, an insulating film which is fixed in a materially-bonded manner between the separating region and the respective claw pole tooth. The electrically-insulating coating or lamination prevents any further flow of the eddy current flowing within the separating region into the claw pole tooth. In this manner, the eddy current in the separating region can be reduced.

Advantageously, it is further provided that the at least one separating region extends from the outer surface of the claw pole tooth into the respective claw pole tooth. In this manner, an eddy current induced in the separating region, within the claw pole tooth, can also be reduced. On the respective claw pole tooth, a plurality of separating regions can also be arranged, which are adjacent to each other and are mutually-separated by the electrically-insulating coatings or laminations of the respective separating regions. Alternatively, the plurality of separating regions can also be mutually separated by claw pole tooth regions which consist of the magnetically-conductive material of the respective claw pole tooth. The width and depth of the respective separating regions in this case can be equal or different. Moreover, the width and depth of the respective separating regions can be adapted to the configuration of the claw pole, and optimized for the reduction of the loss of the permanent magnetic field around the rotor.

In an advantageous configuration of the rotor according to the invention, the at least one separating region is fixed to the outer surface and/or to an inner surface and/or to a lateral surface of the respective claw pole tooth in a materially-bonded manner. Thus, for example, the electrically-insulating coating or lamination can permit either the electrical insulation of the separating region from the claw pole tooth and the materially-bonded attachment of the separating region to the claw pole tooth.

In a further development of the rotor according to the invention, it is advantageously provided that the at least one separating region is arranged in parallel with the axis of rotation of the rotor. In this manner, the eddy current induced in the separating region can only flow along the axis of rotation of the rotor, and is reduced. The separating region can thus, for example, be of strip-shaped design, and extend over the full length of the claw pole tooth, such that the induced eddy current can advantageously be reduced over the full length of the claw pole tooth.

In a specifically preferred configuration of the rotor according to the invention, it is advantageously provided that the at least one separating region is comprised of a plurality of mutually electrically-insulated separating sub-regions, which are configured on the outer surface of the claw pole tooth in a mutually parallel arrangement. The respective separating region thus comprises a plurality of mutually electrically-insulated separating sub-regions, wherein an eddy current which is induced in one of the separating sub-regions only flows in that separating subregion. In this manner, eddy currents in each of the separating sub-regions of the respective separating region, and thus in the respective separating region as a whole, are reduced. The width of the respective separating sub-regions in this case can be equal or different, and can be optimized for the reduction of the loss of the permanent magnetic field around the rotor. The at least one separating region can thus extend over the entire outer surface of the claw pole tooth, such that eddy currents are advantageously reduced in the entire claw pole tooth. Alternatively, a plurality of separating regions, each comprising a plurality of separating sub-regions, can be configured on the outer surface of the claw pole tooth. In an advantageous configuration of the rotor according to the invention, it is provided that, on the outer surface of the respective claw pole tooth, two separating regions extend in parallel with the axis of rotation.

Advantageously, it is provided that the plurality of claw pole teeth of the claw pole is of identical design. In this manner, a stable and uniform permanent magnetic field can be generated around the rotor.

Overall, the rotor according to the invention can be produced with reduced complexity and in a cost-effective manner wherein, in the rotor according to the invention, eddy currents are advantageously reduced, and a loss of the permanent magnetic field around the rotor, associated with eddy currents, is minimized.

The invention further relates to a generator having a stator and a rotor which is accommodated on the interior of the stator wherein, according to the invention, the rotor is equipped as described above.

Further significant characteristics and advantages of the invention proceed from the sub-claims, from the drawings, and from the associated description of figures, with reference to the drawings.

It is understood that the aforementioned characteristics, and those described hereinafter, can not only be applied in the respective combination indicated, but also in other combinations, or in isolation, without departing from the scope of the present invention.

Preferred exemplary embodiments of the invention are represented in the drawings, and are described in greater detail hereinafter, wherein the same reference symbols are applied to identical, similar, or functionally equivalent components.

Herein, schematically in each case,
- Fig. 1: shows a view of a rotor according to the invention;
- Fig. 2: shows a view of an outer surface of a claw pole tooth, having a plurality of separating regions;
- Fig. 3: shows a view of an inner surface of the claw pole tooth represented in Fig. 2;
- Fig. 4: shows a view of an outer surface of a claw pole tooth, having a separating region;
- Fig. 5: shows a view of an inner surface of the claw pole tooth represented in Fig. 4;
- Fig. 6: shows a view of an outer surface of a claw pole tooth, having two mutually-separated separating regions;
- Fig. 7: shows a view of an inner surface of the claw pole tooth represented in Fig. 6.

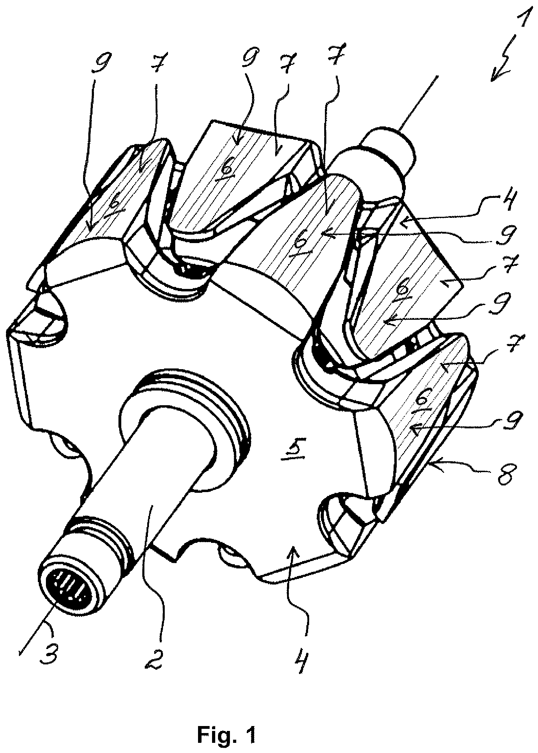

Fig. 1 shows a view of a rotor 1 according to the invention. The rotor 1 in this case has a shaft 2, which defines an axis of rotation 3 of the rotor 1. The rotor 1 moreover has two claw poles 4, each having a base element 5 which is perpendicular to the axis of rotation 3, and a plurality of integrally-configured claw pole teeth 6 on the base element 5. The claw pole teeth 6 of the respective claw pole 4 are arranged perpendicularly on the respective base elements 5, and outer surfaces 7 of the claw pole teeth 6 constitute a radial outer circumference 8 of the rotor 1 to the axis of rotation 3. The respective claw pole 4 is comprised of a magnetically-conductive material. According to the invention, each of the claw pole teeth 6 has a separating region 9 which, in part, lies on the respective outer surface 7 of the claw pole tooth 6 and, at least in part electrically, is insulated from the respective claw pole tooth 6. By means of the separating region 9, which is electrically insulated from the claw pole tooth 6, an eddy current induced in the separating region 9 can only flow in the separating region 9. In this manner, the loss of the permanent magnetic field around the rotor 1, associated with the eddy current, can advantageously be minimized. The claw pole teeth 6 of the respective claw pole 4 are appropriately of identical design, in order to permit the generation of a stable and uniform permanent magnetic field around the rotor 1.

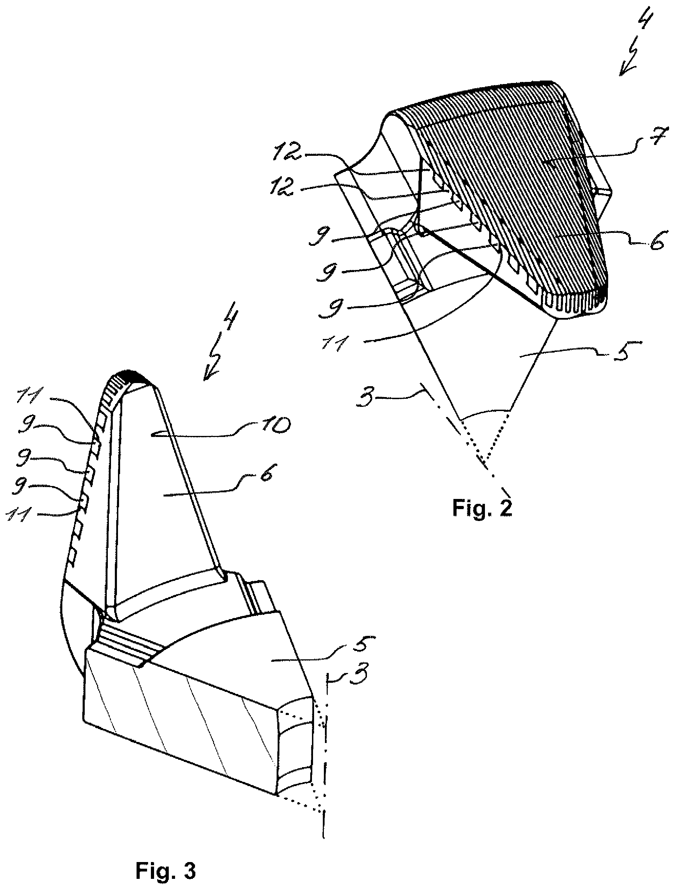

Fig. 2 and Fig. 3 respectively show a view of the outer surface 7 and of an inner surface 10 of the claw pole tooth 6. In this exemplary embodiment, the claw pole tooth 6 of the claw pole 4 has a plurality of separating regions 9, which extend from the outer surface 7 of the claw pole tooth 6 into the respective claw pole tooth 6. The separating regions 9 are comprised of a magnetically-conductive material, preferably electric sheet steel, and contribute to a permanent magnetic field which is induced around the claw pole tooth 6. The separating regions 9 are isolated from the claw pole tooth 6 by an electrically-insulating coating or lamination 11, such that an eddy current induced in the respective separating region 9 by rotation of the rotor 1 can only flow in the respective separating region 9, and is thus reduced. The separating regions 9 are attached to the claw pole tooth 6 in a materially-bonded manner, and are mutually separated by claw pole tooth regions 12. In this case, the separating regions 9 are of equal width and of equal depth, and extend in a mutually parallel manner along the axis of rotation 3 of the rotor 1. By means of the plurality of parallel-oriented separating regions 9, the induced eddy currents on the entire outer surface 7 of the claw pole tooth 6 can be reduced, and the loss of the permanent magnetic field around the rotor 1, associated with the eddy currents, can be minimized.

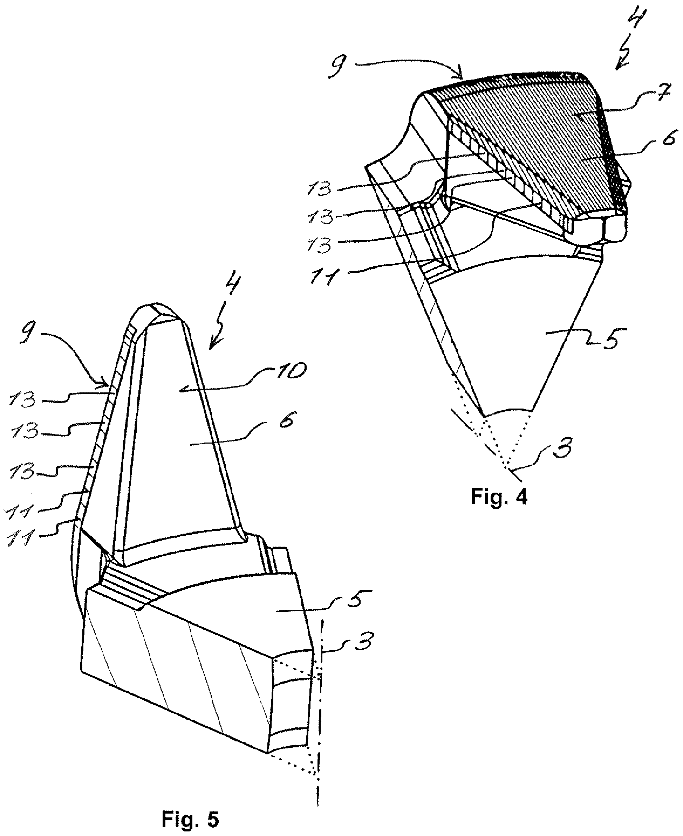

Fig. 4 and Fig. 5 respectively show a view of the outer surface 7 and the inner surface 10 of a claw pole tooth 6 of alternative design. In this case, a single separating region 9 is arranged on the claw pole tooth 6, having a plurality of separating sub-regions 13 which are mutually electrically insulated by the electrically-insulating coating or lamination 11. The separating sub-regions 13 are configured on the outer surface 7 of the claw pole tooth 6 in a mutually parallel manner, and are fixed to the outer surface 7 and, in part, to the lateral surfaces 14 of the claw pole tooth 6 in a materially-bonded manner. The eddy currents induced in the respective separating sub-regions 13 only flow in said separating sub-regions 13, and thus, in each of the separating sub-regions 13 and in the separating region 9 as a whole, are reduced.

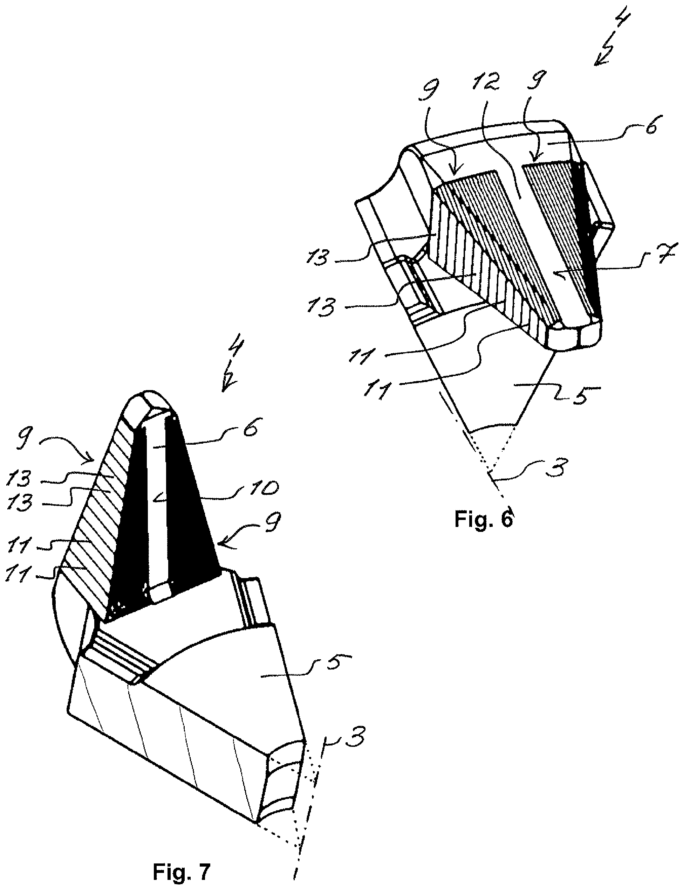

Fig. 6 and Fig. 7 respectively show a view of the outer surface 7 and the inner surface 10 of the claw pole tooth 6 of alternative design. In this exemplary embodiment, the claw pole tooth 6 has two separating regions 9, each of which comprises a plurality of mutually electrically-insulated separating sub-regions 13. Here again, eddy currents in the respective separating sub-regions 13, and in the two separating regions 9 as a whole, are reduced. A loss of the permanent magnetic field around the rotor 1, associated with the induced eddy currents, is advantageously reduced. In this case, the separating regions 9 are attached to the outer surface 7, to the lateral surfaces 14, and to the inner surface 10 of the claw pole tooth 6 in a materially-bonded manner.

Overall, the rotor 1 according to the invention can be produced with reduced complexity and in a cost-effective manner wherein, in the rotor 1 according to the invention, eddy currents are advantageously reduced, and a loss of the permanent magnetic field around the rotor 1, associated with eddy currents, is minimized.

## Claims

1. Rotor (1) for a generator,
- wherein the rotor (1) has a shaft (2), which defines an axis of rotation (3) of the rotor (1),
- wherein the rotor (1) has at least one claw pole (4), having a base element (5) which is perpendicular to the axis of rotation (3), and a plurality of integrally-configured claw pole teeth (6) on the base element (5),
- wherein the claw pole teeth (6) of the claw pole (4) are arranged perpendicularly on the base element (5), and outer surfaces (7) of the claw pole teeth (6) constitute a radial outer circumference (8) of the rotor (1) to the axis of rotation (3), and
- wherein the claw pole (4) is comprised of a magnetically-conductive material, **characterized in that**
at least one of the claw pole teeth (6) has at least one separating region (9) which, at least in part, lies on the outer surface (7) of the claw pole tooth (6) and, at least in part, is electrically insulated from the respective claw pole tooth (6).

2. Rotor according to Claim 1,
**characterized in that**
the at least one separating region (9) is comprised of a magnetically-conductive material, preferably of electric sheet steel, and is isolated from the claw pole tooth (6), at least in part, by an electrically-insulating coating or lamination (11).

3. Rotor according to Claim 1 or 2,
**characterized in that**
the at least one separating region (9) extends from the outer surface (7) of the claw pole tooth (6) into the respective claw pole tooth (6).

4. Rotor according to one of the preceding claims,
**characterized in that**
the at least one separating region (9) is fixed to the outer surface (7) and/or to an inner surface (10) and/or to a lateral surface (14) of the respective claw pole tooth (6) in a materially-bonded manner.

5. Rotor according to one of the preceding claims,
**characterized in that**
the at least one separating region (9) is arranged in parallel with the axis of rotation (3) of the rotor (1).

6. Rotor according to one of the preceding claims,
**characterized in that**
the at least one separating region (9) is comprised of a plurality of mutually electrically-insulated separating sub-regions (13), which are configured on the outer surface (7) of the claw pole tooth (6) in a mutually parallel arrangement.

7. Rotor according to Claim 6,
**characterized in that**
on the at least one claw pole tooth (6), two separating regions (9) extend in parallel with the axis of rotation (3), and are mutually separated by a magnetically-conductive claw pole tooth region (12).

8. Rotor according to one of the preceding claims,
**characterized in that**
the plurality of claw pole teeth (6) of the claw pole (4) is of identical design.

9. Generator having a stator and a rotor accommodated on the interior of the stator,
**characterized in that**
the rotor (1) is equipped according to one of Claims 1 to 8.
